# FASCICULE DE BREVET EUROPEEN

(11) **EP 1 350 680 B1**
(45) Date de publication et mention de la délivrance du brevet: **31.05.2006**
(21) Numéro de dépôt: 03290560.6
(22) Date de dépôt: 07.03.2003
(51) Int. Cl.: B60R 19/18

(54) **Absorbeur d'energie destiné à s'intercaler entre une poutre rigide et une peau de pare-chocs**
Energieaufnahmevorrichtung zum Einbauen zwischen einem Querträger und einer Stossfängerhaut
Energy absorber to be mounted between a crash bar and an automotive bumper skin

(30) Priorité: 08.03.2002 FR 0202971
(43) Date de publication de la demande: 08.10.2003
(73) Titulaire: COMPAGNIE PLASTIC OMNIUM, 69007 Lyon (FR)
(72) Inventeur: Malteste, Stéphane, 01800 Meximieux (FR); Roussel, Thierry, 52500 Fayl La Foret (FR); Rocheblave, Laurent, 69530 Brignais (FR); Cavillon, Thierry, 01250 Jasseron (FR)
(74) Mandataire: Remy, Vincent Noel Paul

(56) Documents cités:
- EP-A- 0 462 450
- US-A- 4 050 726
- US-A- 4 925 224
- US-A- 5 201 912
- US-A1- 2001 054 826

## Description

La présente invention concerne un absorbeur d'énergie et un ensemble constitué d'un absorbeur d'énergie et d'une poutre rigide.

On sait qu'un pare-chocs comprend une enveloppe décorative externe, appelée peau, et un système interne d'absorption d'énergie qui, en se déformant, consomme le plus possible de l'énergie d'un choc afin d'en transmettre le moins possible au véhicule.

En matière de chocs, les constructeurs automobiles s'imposent un cahier des charges qui envisage trois catégories d'impacts, à savoir : les chocs à haute vitesse qui correspondent à un impact frontal du véhicule contre un obstacle rigide ou déformable à une vitesse de 56 à 64 km/h, les chocs « assurances » tels que celui connu sous le nom de « Danner », à 15 km/h contre un mur fixe, et les petits chocs, ou chocs « parking » à une vitesse comprise entre 4 et 8 km/h, comme celui défini par la norme **ECE R42**.

On envisage les chocs à haute vitesse avec un objectif de protection des occupants du véhicule, tandis que les chocs « assurances » et « parking », c'est-à-dire les « petits chocs », correspondent plutôt à un objectif de réduction des coûts de réparation.

Les chocs à haute vitesse sont traités par l'association de la structure du véhicule et des systèmes de sécurité qui sont inclus dans l'habitacle du véhicule.

Les chocs "assurances" sont traités par la combinaison de prolonges de longerons et de la poutre de chocs du véhicule.

Les « chocs parkings » sont parfois traités par des systèmes d'absorbeur placés entre la peau et la poutre du véhicule, sous la forme de structures en nid d'abeilles injectés.

A ces types de chocs, vient s'ajouter un nouveau cahier des charges : le choc piéton. Le traitement de ce choc nécessite un assouplissement des systèmes et un comportement uniforme de ceux-ci sur toute la largeur du véhicule, car un tel choc doit respecter la jambe du piéton afin de limiter les blessures graves et handicapantes. A cet effet, on utilise généralement une mousse obtenue par expansion de thermoplastique (mousse PPE).

Pour concilier les exigences relatives aux chocs déjà mentionnés et aux chocs piétons, on procède habituellement à un empilement d'un système traditionnel et d'une couche de mousse. La mousse absorbe l'énergie des chocs piétons, tandis que le système fonctionne en cas de choc à plus haute énergie, après enfoncement de la mousse.

Un absorbeur d'énergie selon le préambule de la revendication 1 est décrit dans le document US 4925224 A1.

Un des problèmes d'un tel empilement est son coût, qui est très élevé, notamment en raison du prix de la mousse et des manipulations nécessaires à sa mise en place sur le système.

Un autre problème résulte de la profondeur qui est nécessaire à l'efficacité de la couche de mousse. Cette donnée est directement liée aux caractéristiques intrinsèques du matériau qui définissent sa capacité à absorber de l'énergie et son taux de compression maximal. Ceci entraîne un encombrement relativement important à l'avant du véhicule.

La présente invention vise à proposer une nouvelle configuration d'absorbeurs qui respecte le cahier des charges relatif aux chocs pour toutes les catégories de chocs mentionnées ci-dessus, mais qui est particulièrement simple et beaucoup plus économique à réaliser.

La présente invention a pour objet un absorbeur d'énergie destiné à s'intercaler entre une peau de pare-chocs et une poutre rigide ayant une portée d'appui et au moins un angle offrant une surface d'échappement, l'absorbeur ayant pour fonction d'absorber, par compression, l'énergie de chocs dirigés selon une direction d'écrasement et comportant un ensemble de nervures dont chacune s'étend parallèlement à la direction d'écrasement et possède un bord libre destiné à s'appuyer contre la poutre.

Cet absorbeur est caractérisé en ce que ledit ensemble de nervures comprend au moins une nervure agencée pour que, en cas de choc, son bord libre demeure en appui contre la poutre tandis que ladite nervure flambe et au moins une nervure agencée pour que, en cas de choc, son bord libre commence par s'échapper de la poutre en glissant sur la surface d'échappement, après quoi ladite nervure glisse sur l'angle et fléchit en s'écartant de plus en plus de la direction d'échappement.

L'absorbeur d'énergie selon l'invention ne requiert la présence d'aucune mousse et peut être obtenu directement par moulage de matière plastique dans les mêmes conditions que la structure en nid d'abeille de l'état de la technique.

Pour cette raison, l'absorbeur d'énergie selon l'invention est très économique à réaliser.

L'originalité de l'absorbeur d'énergie selon l'invention réside dans le fait qu'il comporte deux types de nervures, à savoir une ou plusieurs nervures à flambage qui, comme dans un nid d'abeille, absorbent l'énergie du choc en se comprimant axialement et des nervures à flexion qui, contrairement à des nervures de nid d'abeille, glissent sur l'angle de la poutre avec une force de frottement croissante à mesure que la poutre s'approche de la base de la nervure considérée, ladite nervure formant un angle croissant avec la direction du choc.

L'intérêt de ces nervures à flexion est qu'elles offrent une résistance à la déformation qui va croissant à mesure de l'enfoncement de l'absorbeur, ce qui est le comportement inverse d'une nervure à flambage.

On parvient ainsi à reproduire le comportement d'une mousse sans devoir recourir à un tel matériau.

Dans un mode de réalisation particulier de l'invention, l'une au moins des nervures comporte une portion de base, opposée à son bord libre, munie de moyens de rigidification transversaux.

Ces moyens de rigidification transversaux reconstituent une structure de nid d'abeille dans la portion de base de la nervure.

Il est important selon l'invention que cette portion de base ne s'étende pas sur toute la nervure car cette dernière doit comporter une portion d'extrémité apte à flamber ou à fléchir dans la direction verticale.

La présente invention a également pour objet un ensemble constitué d'un absorbeur d'énergie et d'une poutre rigide ayant une portée d'appui et au moins un angle offrant une surface d'échappement, destinée à être placé derrière une peau de pare-chocs pour absorber l'énergie de chocs dirigés selon une direction d'écrasement, l'absorbeur comportant un ensemble de nervures dont chacune s'étend parallèlement à la direction d'écrasement et possède un bord libre s'appuyant contre la poutre, caractérisé en ce que la portée d'appui de la poutre est conformée pour que le bord libre d'une nervure ne puisse pas glisser dessus latéralement en cas d'écrasement selon la direction d'écrasement, de sorte que ladite nervure flambe, en ce que l'angle de la poutre est configuré pour que, en cas d'écrasement selon la direction d'écrasement, le bord libre d'une nervure de l'absorbeur échappe latéralement de la poutre en glissant sur la surface d'échappement, puis que ladite nervure glisse sur l'angle et fléchisse en s'écartant de plus en plus de la direction d'écrasement et en ce que ledit ensemble de nervures comprend au moins une nervure agencée pour que son bord libre prenne appui contre ladite surface de l'angle de la poutre et au moins une nervure agencée pour que son bord libre prenne appui contre ladite portée d'appui de la poutre.

Avantageusement, la surface d'appui de la poutre est constituée par une forme concave qui retient les extrémités libres des nervures destinées à flamber pour les empêcher d'échapper de poutre et de se comporter comme des nervures à flexion.

Dans le but de faciliter la compréhension de l'invention, on va maintenant en décrire un mode de réalisation donné à titre d'exemple non limitatif, à l'aide des dessins annexés dans lesquels :
- la figure 1 est une vue en perspective d'un absorbeur selon l'invention,
- la figure 2 est une vue en section de l'absorbeur de la figure 1 monté dans une peau de pare-chocs devant une poutre de choc,
- la figure 3 est une vue analogue à la figure 2 montrant le système d'absorption en cours d'écrasement,

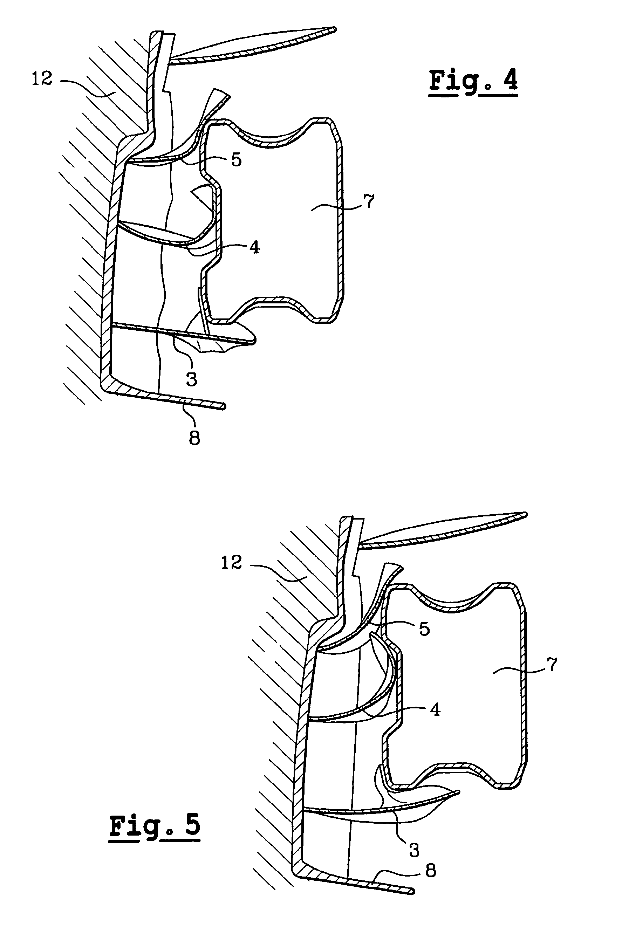

- la figure 4 est une vue analogue à la figure 3 à un stade ultérieur de l'écrasement,
- la figure 5 est une vue analogue à la figure 4 à un stade ultérieur de l'écrasement.

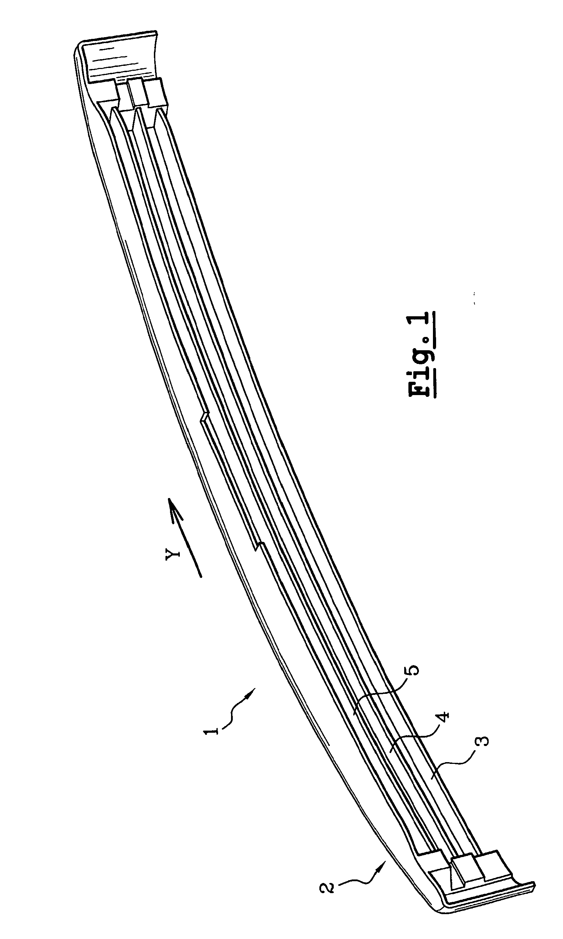

L'absorbeur 1 de la figure 1 présente une direction longitudinale Y qui correspond à la direction transversale du véhicule.

Il a été réalisé par injection de polypropylène ou de polyéthylène dans des conditions classiques d'injection de thermoplastique.

Il comporte une plaque frontale 2 et trois nervures ou toiles longitudinales 3, 4, 5 parallèles entre elles et horizontales lorsque l'absorbeur est monté sur le véhicule.

Dans l'exemple illustré, les nervures supérieure 5 et inférieure 3 sont munies de nervures verticales de renfort 6 sur leur portion de base, qui s'étend ici environ sur la moitié de chaque nervure. La nervure médiane 4 ne comporte aucune nervure verticale de renfort.

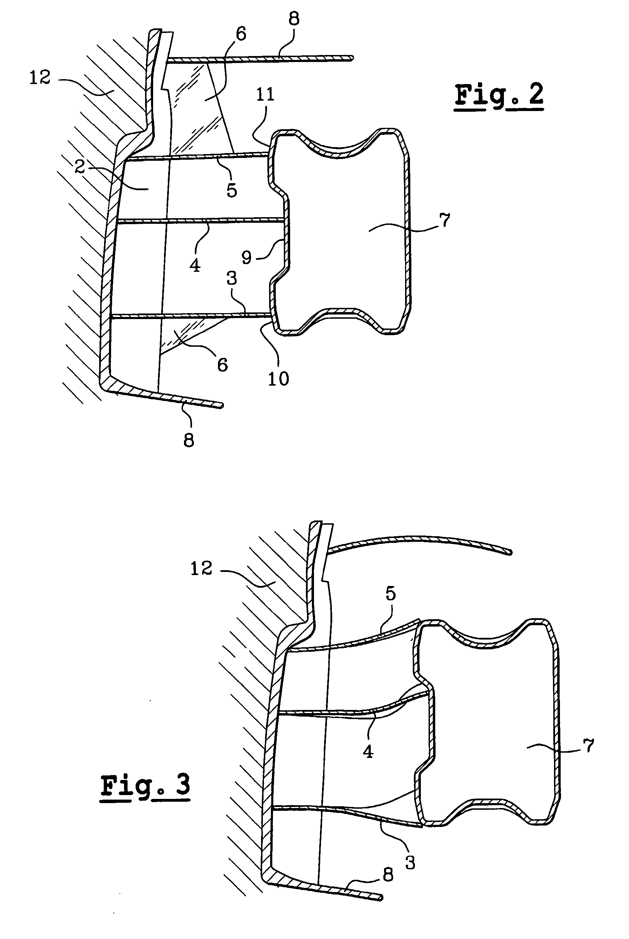

Comme on le voit mieux sur la section de la figure 2, la nervure médiane 4 est légèrement plus longue que les nervures supérieure et inférieure. Cette différence de longueur se justifie par la forme de la poutre de chocs 7 contre laquelle l'absorbeur vient se positionner lorsqu'il est monté dans la peau de pare-chocs 8.

En effet, la poutre 7 présente une portée d'appui 9 pour l'absorbeur, constituée par une forme concave, le creux de cette concavité recevant la nervure médiane 4, et étant bordé par deux angles, supérieur 11 et inférieur 10, offrant chacun une surface d'échappement légèrement chanfreinée.

On va maintenant décrire le comportement en cas de choc contre un obstacle 12 de l'ensemble d'absorption d'énergie formé par la poutre de chocs 7, l'absorbeur 1 et la peau 8.

En début de choc, la peau de pare-chocs 8 s'enfonce et la plaque 2 de l'absorbeur se rapproche de la poutre de chocs. Les nervures supérieure 5 et inférieure 3 glissent sur la surface d'échappement de l'angle 11, 10 de la poutre correspondant et s'escamotent latéralement, respectivement vers le haut et vers le bas du fait des chanfreins.

Simultanément, la nervure médiane 4, qui est centrée sur la poutre de chocs, vient en butée contre le fond du creux 9 et flambe en demeurant en appui contre ce fond.

Au cours du choc, les nervures supérieure 5 et inférieure 3 qui glissent sur les angles de la poutre de chocs s'écartent de plus en plus de la direction horizontale du fait que l'angle supérieur 11 est plus haut que la nervure supérieure 5 et que l'angle inférieur 10 est plus bas que la nervure inférieure 4. Le glissement de chaque toile sur chaque angle s'accompagne, par conséquent, d'un frottement qui va croissant à mesure de l'enfoncement de l'absorbeur sur la traverse. Les toiles supérieure 5 et inférieure 3 sont des nervures à flexion.

Simultanément, la toile médiane 4 qui flambe en demeurant dans le creux 9 de la portée d'appui de la poutre, résiste de moins en moins à l'écrasement et absorbe en conséquence une quantité décroissante d'énergie.

Des essais réalisés avec le système d'absorption d'énergie décrit ci-dessus en comparaison avec un absorbeur muni d'une mousse et un absorbeur muni d'un réseau de nervures en nid d'abeille montrent que la configuration de l'absorbeur selon l'invention donne des résultats tout à fait satisfaisants et comparables, voire supérieurs dans certains cas, aux absorbeurs de l'état de la technique.

Il est bien entendu que les modes de réalisation décrits ci-dessus ne présentent aucun caractère limitatif et pourront recevoir toute modification souhaitable sans sortir pour cela du cadre de l'invention.

## Revendications

1. Ensemble constitué d'un absorbeur d'énergie (1) et d'une poutre rigide (7) ayant une portée d'appui et au moins un angle (10, 11) offrant une surface d'échappement, destinée à être placé derrière une peau de pare-chocs (6) pour absorber l'énergie de chocs dirigés selon une direction d'écrasement, l'absorbeur comportant un ensemble de nervures (3, 4, 5) dont chacune s'étend parallèlement à la direction d'écrasement et possède un bord libre s'appuyant contre la poutre, **caractérisé en ce que** la portée d'appui de la poutre est conformée pour que le bord libre d'une nervure ne puisse pas glisser dessus latéralement en cas d'écrasement selon la direction d'écrasement, de sorte que ladite nervure flambe, **en ce que** l'angle de la poutre est configuré pour que, en cas d'écrasement selon la direction d'écrasement, le bord libre d'une nervure de l'absorbeur échappe latéralement de la poutre en glissant sur la surface d'échappement, puis que ladite nervure glisse sur l'angle et fléchisse en s'écartant de plus en plus de la direction d'écrasement et **en ce que** ledit ensemble de nervures comprend au moins une nervure agencée pour que son bord libre prenne appui contre ladite surface de l'angle de la poutre et au moins une nervure agencée pour que son bord libre prenne appui contre ladite portée d'appui de la poutre.

2. Ensemble selon la revendication 1 dans lequel, la portée d'appui de la poutre est constituée par une forme concave.

3. Ensemble selon la revendication 1 ou 2, dans lequel, l'une au moins des nervures de l'absorbeur comporte une portion de base, opposée à son bord libre, munie de moyens de rigidification transversaux.

4. Ensemble selon l'une quelconque des revendications 1 à 3, dans lequel, la surface d'échappement de la poutre rigide (7) est légèrement chanfreinée.

## Claims

1. An assembly constituted by an energy absorber (1) and a rigid beam (7) having a bearing surface and at least one corner (10, 11) presenting an escape surface, for placing behind a bumper skin (6) to absorb impact energy directed in a crumpling direction, the energy absorber comprising a set of ribs (3, 4, 5) each of which extends parallel to the crumpling direction and possesses a free edge bearing against the beam, **characterized in that** the bearing surface of the beam is shaped in such a manner that the free edge of one rib cannot slide laterally over the beam in the event of crumpling in the crumpling direction, such that said rib buckles, and **in that** the corner of the beam is shaped in such a manner that in the event of crumpling in the crumpling direction, the free edge of a rib of the energy absorber escapes laterally from the beam by sliding over the escape surface, said rib then sliding over the corner and bending while moving further and further away from the crumpling direction, and **in that** said set of ribs includes at least one rib arranged so that its edge bears against said corner surface of the beam, and at least one rib arranged so that its free edge bears against said bearing surface of the beam.

2. An assembly according to claim 1, in which the bearing surface of the beam is constituted by a concave shape.

3. An assembly according to claim 1 or 2, in which at least one of the ribs has a base portion, remote from its free edge, and provided with transverse stiffener means.

4. An assembly according to any one of claims 1 to 3, in which the escape surface of the rigid beam is slightly chamfered.

## Patentansprüche

1. Einheit bestehend aus einem Energieabsorber (1) und einem starren Träger (7) mit einem Auflagebereich und zumindest einer Schräge (10, 11), die eine Abgleitfläche bietet, die zum Anbringen hinter einer Stoßstangenversteifung (6) vorgesehen ist, um die Energie von Stößen zu absorbieren, die in Knautschrichtung erfolgen, wobei der Absorber eine Anordnung von Rippen (3, 4, 5) umfasst, von denen sich jede parallel zur Knautschrichtung erstreckt und einen freien Rand aufweist, der sich auf den Träger stützt, **dadurch gekennzeichnet, dass** der Auflagebereich des Trägers so gestaltet ist, dass der freie Rand einer Rippe im Fall eines Knautschens in Knautschrichtung nicht derart seitlich darüber gleiten kann, dass die Rippe knickt, **dadurch gekennzeichnet, dass** die Schräge des Trägers so konfiguriert ist, dass im Fall eines Knautschens in Knautschrichtung der freie Rand einer Rippe des Absorbers seitlich am Träger vorbeigeht, indem er auf der Abgleitfläche gleitet, da die Rippe auf der Schräge gleitet und sich durchbiegt, indem sie sich immer mehr von der Knautschrichtung entfernt, und **dadurch gekennzeichnet, dass** die Anordnung von Rippen zumindest eine Rippe umfasst, die so angeordnet ist, dass sich ihr freier Rand auf die Fläche der Schräge vom Träger stützt und zumindest eine Rippe, die so angeordnet ist, dass sich ihr freier Rand auf den Auflagebereich des Trägers stützt.

2. Einheit nach Anspruch 1, in der der Auflagebereich des Trägers durch eine konkave Form gebildet ist.

3. Einheit nach Anspruch 1 oder 2, in der zumindest eine der Rippen des Absorbers einen Basisabschnitt umfasst, der ihrem freien Rand gegenüber liegt und mit Querversteifungsmitteln versehen ist

4. Einheit nach einem der Ansprüche 1 bis 3, in der die Abgleitfläche des starren Trägers (7) leicht abgeschrägt ist.
